Europäisches Patentamt

European Patent Office

Office européen des brevets

(11) Veröffentlichungsnummer: **0 357 960**
**A1**

# (12) EUROPÄISCHE PATENTANMELDUNG

(21) Anmeldenummer: **89114315.8**

(22) Anmeldetag: **03.08.89**

(51) Int. Cl.5: **B01D 53/34**

(30) Priorität: **09.09.88 DE 3830803**

(43) Veröffentlichungstag der Anmeldung:
**14.03.90 Patentblatt 90/11**

(84) Benannte Vertragsstaaten:
**AT BE CH DE ES FR GB GR IT LI LU NL SE**

(71) Anmelder: **ARASIN GMBH**
**Weseler Strasse 100**
**D-4223 Voerde-Emmelsum(DE)**

(72) Erfinder: **Glass, Reinhard, Dipl.-Ing.**
**Grünstrasse 9**
**D-4223 Voerde(DE)**

(74) Vertreter: **Seiler, Siegfried**
**c/o DEUTSCHE SOLVAY-WERKE GmbH**
**Langhansstrasse 6 Postfach 11 02 70**
**D-5650 Solingen 11(DE)**

(54) **Verfahren und Vorrichtung zur Reinigung von Abgasen durch Wäsche mit einer Adsorptionsmittel-Suspension.**

(57) Die vorliegende Erfindung betrifft ein Verfahren und eine Vorrichtung zur Reinigung von Abgasen durch Wäsche mit einer Adsorptionsmittel-Suspension. Die Adsorptionsmittel-Suspension wird dabei in einer Konzentration von 40 g/l bis 200 g/l nahezu gleichmäßig verteilt, über mindestens eine geordnete Stoffaustauschzone geleitet und in Kontakt mit dem Gas gebracht, danach in mindestens einem getrennt angeordneten Reaktor geleistet, die biologisch abbaubaren oder umwandelbaren Verunreinigungen unter Mitverwendung von aeroben Bakterien und Sauerstoff unter Zwangsbewegung umgesetzt und die gereinigte Flüssigkeit oder Suspension ganz oder in einem Teilstrom zu der Gaswaschvorrichtung zurückgeführt, dort verteilt und mit dem zu reinigenden Gas erneut in Kontakt gebracht.

EP 0 357 960 A1

## Verfahren und Vorrichtung zur Reinigung von Abgasen durch Wäsche mit einer Adsorptionsmittel-Suspension

Die vorliegende Erfindung betrifft ein Verfahren und eine Vorrichtung zur Reinigung von Abgasen durch Wäsche mit einer Adsorptionsmittel-Suspension, enthaltend mindestens ein feinteiliges Adsorptionsmittel mit einem mittleren Körnungsdurchmesser von 0,0001 mm bis 5 mm, die zumindestens einer Gaswaschvorrichtung kontinuierlich zugeführt, dort verteilt und mit dem Abgas in Kontakt gebracht, die Schadstoffe, Verunreinigungen oder abzutrennenden Stoffe oder ein Teil derselben auf biologischem Wege umgesetzt, abgebaut und/oder chemisch oder physikalisch geändert und/oder ganz oder teilweise nachfolgend abgetrennt werden.

Gemäß der Erfindung wird die Adsorptionsmittel-Suspension in einer relativ hohen durchschnittlichen Anwendungskonzentration gleichmäßig oder nahezu gleichmäßig in der Gaswaschvorrichtung verteilt und hat dort eine sehr kurze Verweilzeit bzw. eine relativ hohe Durchtrittsgeschwindigkeit, während sie danach in mindestens einem, von der Gaswasch-Vorrichtung getrennt angeordneten aerobe Bakterien enthaltenden Reaktor geleitet wird und dort bei einer sehr viel höheren Verweilzeit unter Zwangsbewegung behandelt und die biologische Umwandlung von Verunreinigungen durchgeführt wird.

Bei diesem Verfahren, ebenso bei dem Verfahren gemäß DE-OS 32 27 375 und DE-OS 33 45 944, ergibt sich jedoch der Nachteil, daß sich Belebtschlamm und/oder andere biologische Feststoffe auf dem Adsorptionsmaterial in erheblichen Dicken abscheiden, aktive Schüttungen zuwachsen oder die Aktivität der Adsorptionsmittel erheblich blockiert wird, so daß die Wirkung der Adsorptionsmittel ganz erheblich abgeschwächt wird und das Adsorptionsmittel nach einer gewissen Zeit mehr oder weniger nur noch als Trägerstoff dient.

Ziel und Aufgabe der vorliegenen Erfindung war es, ein gegenüber dem Stand der Technik verbessertes Verfahren und eine verbesserte Vorrichtung zu finden. Das Verfahren und die Vorrichtung sollten u. a. nicht in Abhängigkeit von der Bakterienkonzentration in der Waschvorrichtung arbeiten müssen, d. h. auch bei Nichtanwesenheit von Bakterien oder bei der Mitwirkung von Bakterien wirksam sein, eine gute Ausbeute hinsichtlich der biologisch abbaubaren Stoffe aufweisen, das Risiko des durch Bakterien oder ggf. Belebtschlamm im Waschwasserturm (Gaswaschvorrichtung) auftretendes Zuwachsen und/oder die weitgehende Blockierung der Adsorptionsmittel verringern. Weiterhin sollten schlecht, begrenzt wasserlösliche oder weitgehend wasserunlösliche Schadstoffe besser abgeschieden werden können.

Erfindungsgemäß wurde festgestellt, daß diesen Zielen und Aufgaben ein Verfahren zur Reinigung von Abgasen durch Wäsche mit einer Adsorptionsmittel-Suspension gerecht wird, wobei das feinteilige Adsorptionsmittel einen mittleren Körnungsdurchmesser von 0,0001 mm bis 5 mm, aufweist, und zumindestens einer Gaswaschvorrichtung kontinuierlich zugeführt, dort verteilt und mit dem Abgas in Kontakt gebracht, die Schadstoffe, Verunreinigungen oder abzutrennenden Stoffe oder ein Teil derselben auf biologischem Wege umgesetzt, abgebaut und/oder chemisch oder physikalisch geändert und/oder ganz oder teilweise nachfolgend abgetrennt werden. Gemäß der Erfindung wird die Adsorptionsmittel-Suspension in einer Konzentration (durchschnittliche Anwendungskonzentration) von 40 g/l bis 200 g/l, gleichmäßig oder nahezu gleichmäßig in der Gaswaschvorrichtung verteilt, die Adsorptionsmittel-Suspension in der Gaswaschvorrichtung über mindestens eine geordnete Stoffaustauschzone geleitet und in Kontakt mit dem Gas gebracht, danach die adsorptionsmittelhaltige Waschflüssigkeit in mindestens einem, von der Gaswasch-Vorrichtung getrennt angeordneten Reaktor geleitet, die biologisch abbaubaren oder umwandelbaren Verunreinigungen unter Mitverwendung von aeroben Bakterien und Sauerstoff oder sauerstoffhaltigen Gasen mit den in der Flüssigkeit enthaltenden Gasverunreinigungen unter Zwangsbewegung der adsorptionsmittelhaltigen und aerobe Bakterien enthaltenden Waschflüssigkeit umgesetzt und die nach der Umsetzung entstandene gereinigte Flüssigkeit oder Suspension ganz oder in einem Teilstrom zu der Gaswaschvorrichtung zurückgeführt, dort verteilt und mit dem zu reinigenden Gas erneut in Kontakt gebracht. Die adsorptionsmittelhaltige Suspension enthält nach einer bevorzugten Ausführungsform auch aerobe Bakterien, kann jedoch auch ohne Bakterien arbeiten und ist unabhängig von der Bakterienkonzentration.

Gemäß einer bevorzugten Ausführungsform des erfindungsgemäßen Verfahrens wird die Adsorptionsmittel-Suspension in einer Mindestberieselungsdichte von 3 bis 40 m³/m²h, vorzugsweise 5 bis 25 m³/m²h, in der Gaswaschvorrichtung verteilt.

Gemäß der vorliegenden Erfindung beträgt die mittlere Verweilzeit der Adsorptionsmittel-Suspension in der Gaswaschvorrichtung oder der Stoffaustauschzone der Gaswaschvorrichtung weniger als 40 sek, während für die mittlere Verweilzeit der aerobe Bakterien enthaltenden Adsorptionsmittel-Suspension im Reaktor eine um mehr als das 90-fache, vorzugsweise mehr als das 150-fache, der mittleren Verweilzeit (als die Verweilzeit in der Gaswaschvorrichtung oder Stoffaustauschvorrichtung) eingehalten werden muß. Dadurch wird u. a. erreicht, daß in Kombination mit der einzuhaltenden Konzentration an Adsorptionsmitteln sowohl in Anwesenheit als auch in Abwesenheit von aeroben Bakterien in der Gaswaschvorrichtung gearbeitet werden kann, die Gefahr des Zuwachsens durch Bakterienkulturen und andere Stoffe in der Gaswaschvorrichtung wird vermindert und/oder die Gefahr der Blockierung der Adsorptionsmittelteilchen durch Umwachsung mit Bakterien wird vermindert.

Nach einer vorzugsweisen Ausführungsform erfolgt die Zwangsbewegung im Reaktor mit einer derartigen Geschwindigkeit, daß im Durchschnitt mehr als 1 $dm^3$ Adsorptionsmitteldispersion oder Waschflüssigkeit in weniger als 30 sek, vorzugsweise in weniger als 10 sek, um mehr als 1 dm bewegt wird. Die Zwangsbewegung erfolgt nach einer Ausführungsform mit einer Geschwindigkeit von mehr als 0,05 m/sec, vorzugsweise mit einer Geschwindigkeit von 0,1 m/sec bis 0,35 m/sec.

Als Adsorptionsmittel kommen die an sich bekannten Adsorptionsmittel, z. B. Zeolith, Silicagel und dgl. in Frage. Bevorzugt wird jedoch Aktivkohle eingesetzt. Nach einer Ausführungsform kann die Aktivkohle auch aus aktivkohlehaltigen Substanzen bestehen oder diese enthalten, so z. B. feinstgemahlene Steinkohle, Braunkohle, Steinkohlen-, Braunkohlen- oder Torfkokse und dgl.

Nach einer bevorzugten Ausführungsform besteht die Adsorptionsmittel-Suspension aus einer wäßrigen Aktivkohle-Suspension oder einer wäßrigen adsorptive Kohle enthaltenden Suspension, enthaltend Aktivkohle mit einem mittleren Körnungsdurchmesser von 0,005 mm bis 1 mm. Die wäßrige Aktivkohle-Suspension wird bevorzugt in einer durchschnittlichen Anwendungskonzentration von 50 g/l bis 150 g/l in der Gaswaschvorrichtung verteilt. Eine Vernebelung der Suspension soll vermieden werden, da dabei nicht die kurzen Verweilzeiten eingehalten werden können, andererseits die Gefahr der Verstopfung der Düsen besteht. Die Verweilzeit der adsorptionsmittelhaltigen und aerobe Bakterien enthaltenden Waschflüssigkeit im Wirbelreaktor unter Zwangsbewegung beträgt 1 bis 4 Std, vorzugsweise 2 bis 3 Std.

Bei der biologischen Umsetzung im Reaktor wird die zu reinigende Waschflüssigkeit und/oder die Waschflüssigkeit in der Gaswaschvorrichtung auf einen pH-Wert von 5,5 bis 8,5, vorzugsweise 6 bis 8, eingestellt. In diesem pH-Bereich sind die Abbaureaktionen am zweckmäßigsten durchführbar. Die geordnete Stoffaustauschzone besteht gemäß der Erfindung aus Stoffaustauschvorrichtungen mit einem großen freien Durchlaß- oder Durchflußvermögen, die in, parallel oder annähernd parallel zu der Strömungsrichtung, Rieselrichtung oder Durchflußrichtung der Adsorptionsmittelsuspension und/oder senkrecht oder annähernd senkrecht im Waschturm angeordnet sind.

Nach einer Ausführungsvariante des Verfahrens wird ein Teil der Aktivkohle nach dem Durchtritt durch mindestens eine Gaswaschvorrichtung abgetrennt und dieser Teil der aktivkohlehaltigen Flüssigkeit im Kreislauf geführt und der gereinigten Aktivkohlesuspension, die aus dem Reaktor kommt, zur Einhaltung der Anwendungskonzentration zugefügt.

Das erfindungsgemäße Verfahren arbeitet unabhängig von der Bakterienkonzentration in der Wachvorrichtung, d. h. auch bei Nichtanwesenheit von Bakterien oder bei der Mitwirkung von Bakterien. Es weist eine gute Ausbeute hinsichtlich der biologisch abbaubaren Stoffe auf. Das Risiko, daß durch Bakterien oder ggf. Belebtschlamm im Waschwasserturm ein Zuwachsen und/oder ein weitgehende Blockierung der Adsorptionsmittel auftritt, ist verringert. Weiterhin gelingt es, den Abscheidegrad schlecht wasserlöslicher, begrenzt wasserlöslicher oder weitgehend wasserunlöslicher Schadstoffe zu erhöhen und somit auch eine größere Menge dieser Verbindungen biologisch abzubauen. Solche organischen biologisch abbaubaren Schadstoffe sind u.a. Benzol, Benzolderivate und andere aromatische Kohlenwasserstoffe.

Die zu reinigende Waschflüssigkeit wird gemäß der Erfindung in einen Reaktorteilraum in ein darin enthaltenes, im wesentlichen aus Wasser und/oder Waschflüssigkeit bestehendes Gemisch (Reaktorflüssigkeit) eingeleitet. Die eingeleitete adsorptionsmittelhaltige Waschflüssigkeit und Reaktorflüssigkeit tritt dabei unter Bildung zirkulierender Ströme oder Wirbel in den übrigen Reaktorraum über oder durchtritt diesen. Die Bildung der zirkulierenden Ströme oder Wirbel wird durch eingeleitete, zu reinigende Waschflüssigkeit, vorzugsweise durch den Waschflüssigkeitszuleitungspumpendruck und/oder mindestens ein Rührwerk unterstützt oder gesteuert.

Gemäß der Erfindung erfolgt die für die aeroben Mikroorganismen erforderliche Luft- oder Sauerstoffzuführung ganz oder zu mehr als 50 %, vorzugsweise zu mehr als 80 % (bezogen auf den erforderlichen Sauerstoff-bzw. Luftbedarf) durch die zugeleitete Waschflüssigkeit aus der Gaswaschvorrichtung.

Die den Reaktor durchlaufende adsorptionsmittelhaltige Waschflüssigkeit durchströmt nach einer Ausführungsform während des vollständigen oder teilweisen Abbaues der biologisch abbaubaren Verunreinigungen der Waschflüssigkeit durch aerobe Mikroorganismen mindestens einen oberhalb des Bodens des Reaktors angeordneten Reaktorteilraum, vorzugsweise mindestens einen Einleitungsschacht oder eine Einleitungsröhre, bevor die gereinigte Waschflüssigkeit in die Gaswaschvorrichtung geleitet wird.

Im Rahmen der vorliegenden Erfindung gelingt es, aus dem Abgas die unterschiedlichsten Schadstoffe zu entfernen und auf biologischem Wege abzubauen. Biologisch abbaubar sind beispielsweise aromatische Kohlenwasserstoffe, Alkohole, Ester, Ketone, Aldehyde, organische Lösemittel und dgl.

Nach einer bevorzugten Ausführungsform wird die Flüssigkeit im Reaktorraum (Reaktorflüssigkeit) auf eine Temperatur von 10 bis 50 °C, vorzugsweise 17 bis 30 °C, eingestellt.

Bevorzugt wird dabei die Waschflüssigkeit von unten oder am Boden des Reaktors so eingeleitet, daß sie in und unterhalb des Reaktorteilraumes, vorzugsweise in und unterhalb des Einleitungsschachtes oder der Einleitungsröhre, eintritt und diese im wesentlichen in Richtung zur Reaktorflüssigkeitsoberfläche nach oben durchströmt. Nach einer vorzugsweisen Ausführungsform ist bzw. sind der Einleitungsschacht bzw. die Einleitungsschächte oder die Einleitungsröhre oder -röhren in einem Abstand von den Seitenwänden, möglichst annähernd in der Nähe einer Mittellinie oder annähernd zentral angeordnet.

Nach einer anderen Ausführungsform wird die Waschflüssigkeit vor und/oder nach der Einleitung in den Reaktor- oder Reaktorteilraum mit einem chemischen Wasserbehandlungsmittel, vorzugsweise Flockungsmittel und/oder Polyelektrolyt, behandelt und von gebildeten Ausfällungen oder Schlämmen abgetrennt.

Nach einer vorzugsweisen Ausführungsform wird mindestens ein Teil der im Reaktor gereinigten adsorptionsmittelhaltigen Waschflüssigkeit oder teilweise gereinigten adsorptionsmittelhaltigen Waschflüssigkeit im Kreislauf (vorzugsweise unter Einschaltung von Pumpen und dgl.) und bei einer anderen Eintrittsstelle des Reaktors zurückgeführt.

Dadurch gelingt es, innerhalb des Verfahrens das System auf wechselnde Schadstoffkonzentrationen einzustellen. Die Maßnahme wird auch vorzugsweise kombiniert mit einer teilweisen Zurückführung der schadstoffhaltigen Adsorptionsmittelsuspension aus der Waschvorrichtung zu der Flüssigkeitsverteilervorrichtung in der Waschvorrichtung, vorzugsweise unter Mitverwendung eines Teilstromes aus dem Reaktor.

Die Erfindung betrifft weiterhin eine Vorrichtungskombination zur Reinigung von Abgasen, enthaltend mindestens eine Gaswaschvorrichtung für den Kontakt einer Adsorptionssuspension mit dem Abgas, mindestens eine Vorrichtung oder einen Reaktor zum biologischen Abbau der Gasverunreinigungen oder Schadstoffe, unter Mitverwendung von aeroben Bakterien sowie ggf. eine Vorreinigungsvorrichtung, wobei die Vorrichtungen unmittelbar oder mittelbar in an sich bekannter Weise in Verbindung stehen. Gemäß der Erfindung ist in der Gaswaschvorrichtung eine geordnete Stoffaustauschzone angeordnet, bestehend aus rohrähnlichen oder prismenförmigen Stoffaustauschvorrichtungen oder Rieselkörpern, die ein großes, freies Durchlaß- oder Durchflußvermögen aufweisen, die in, parallel oder annähernd parallel zur Strömungsrichtung, Rieselrichtung oder Durchflußrichtung der Adsorptionsmittelsuspension und/oder senkrecht oder annähernd senkrecht im Waschturm angeordnet sind. Der Wirbelreaktor ist mit mindestens einer Rühr- oder Pumpvorrichtung oder ähnlichen Vorrichtungen zur Zwangsbewegung und Durcheinanderwirbelung der Adsorptionssuspension und aeroben Bakterien versehen.

Die rohrähnlichen oder prismenförmigen Stoffaustauschvorrichtungen oder Rieselkörper weisen vorzugsweise durchlochte, unterbrochene oder netzartige Seitenwandungen auf.

Gemäß der Erfindung ist die Gaswaschvorrichtung mit mindestens einer Rohr- oder Schlauchleitung versehen, die unmittelbar oder unter Einschaltung von weiteren Reinigungsvorrichtungen zu der Mikroorganismen enthaltenden Reinigungsvorrichtung (Reaktor) führt, die dort durch eine weitere Rohr- oder Schlauchleitung mit dem Waschturm in Verbindung steht. Die Mikroorganismen enthaltende Reinigungsvorrichtung (Reaktor) ist durch mindestens eine Trennwand, vorzugsweise durch einen Trennschacht oder eine Trennröhre, in einen Einleitungsschachtraum und den übrigen Reaktorraum getrennt. Die untere Kante der Trennwand ist mehr als 7 cm, vorzugsweise mehr als 20 cm (gemessen in senkrechter Richtung), vom Reaktorboden entfernt, die Einleitungsstelle für die zu reinigende Waschflüssigkeit in der Nähe des Einleitungsschachtraumes, vorzugsweise unterhalb des Einleitungsschachtraumes, und die Wasseraustrittsstelle im oberen Teil des Reaktorraumes angeordnet.

Nach einer Ausführungsform weist der Trennschacht oder die Trennröhre Unterbrechungen, Schlitze, Löcher und/oder Ausnehmungen auf.

Nach einer bevorzugten Ausführungsform ist in dem Reaktorteilraum, vorzugsweise in dem Einleitungsschachtraum oder in der Einleitungsröhre, mindestens ein Rührwerk angeordnet.

Bevorzugt werden mehrere hintereinander oder nebeneinander geschaltete Gaswaschvorrichtungen und/oder Reaktoren eingesetzt.

Nach einer anderen Ausführungsform besteht der Trennschacht oder die Trennröhre aus mehreren übereinander oder konzentrisch oder nahezu konzentrisch ineinander angeordneten Trennschächten oder Trennröhren.

Der Trennschacht kann auch trichterförmig ausgebildet sein und in der Nähe der Eintrittsstelle für die Waschflüssigkeit einen kleineren oder größeren Durchmesser (bezogen auf den oberen Durchmesser) aufweisen, jedoch sollten die Abweichungen im Durchmesser gering sein. Vorzugsweise weist der Trennschacht oder die Trennröhre sowohl an der Eintrittsstelle für die Waschflüssigkeit, als auch an der Austrittsstelle den gleichen Durchmesser oder annähernd den gleichen Durchmesser auf. Nach einer bevorzugten Ausführungsform ist die Wassereintrittsstelle als Überlaufvorrichtung oder Überlaufrinne ausgebildet.

Weiterhin ist nach einer bevorzugten Ausführungsform der Reaktorboden schräg oder konkavähnlich ausgebildet und/oder enthält mindestens eine schräg oder konkavähnlich angeordnete Bodenplatte.

Der Reaktorteilraum, vorzugsweise der Einleitungsschacht oder die Einleitungsröhre, ist oberhalb der tiefsten Stelle des Reaktorbodens in einem Abstand von mehr als 7 cm, vorzugsweise mehr als 20 cm (gemessen in senkrechter Richtung vom Reaktorboden), angeordnet. Nach einer Ausführungsform ist unterhalb des Einleitungsschachtraumes mindestens eine Öffnung oder mindestens eine Verteilungs- oder Abgabevorrichtung für zusätzlich einzubringende Luft und/oder für einzubringenden Sauerstoff angeordnet.

Diese Vorrichtung dient jedoch nur als Hilfsvorrichtung für den Fall, daß der Waschwasserkreislauf einige Zeit unterbrochen werden muß und/oder für den Fall, daß im Waschturm nicht genügend Luft oder Sauerstoff von dem im Kreislauf geführten Waschwasser aufgenommen werden kann.

Nach einer bevorzugten Ausführungsform ist der Waschturm mit mindestens einem weiteren Behälter verbunden oder versehen oder vorzugsweise im unteren Teil des Waschturmes mit einer Waschflüssigkeitsvorlage (als Teilraum des Waschturmes) versehen. In diese Behälterteilräume oder Behälter wird die im Gegenstrom zum Gas geleitete Waschflüssigkeit gesammelt, bevor die mit den Abgasen oder Verunreinigungen beladene Waschflüssigkeit erneut in den Waschturm und/oder in den Reaktor oder Reaktorteilraum gelangt.

Nach einer bevorzugten Ausführungsform ist oberhalb der Stoffaustauschzone und/oder oberhalb der Adsorptionsmittelsuspensionszuführung eine Tropfenabscheidezone angeordnet.

Nach einer weiteren vorzugsweisen Ausführungsform ist in der Gaswaschvorrichtung ein Schrägboden oder trichterförmiger Boden zur besseren Ableitung der schadstoffhaltigen adsorptionsmittelhaltigen Suspension zu dem Reaktor zur Zurückleitung angeordnet.

Ausführungsbeispiel:

In die Gaswaschvorrichtung (1) wurde eine Aktivkohle-Suspension mit einer durchschnittlichen Anwendungskonzentration von 60 g/l eingeleitet und gleichmäßig über einer geordneten Stoffaustauschzone (2), bestehend aus rohrähnlichen Kunststoffkörpern mit durchlochten oder netzartigen Seitenwandungen, verteilt.

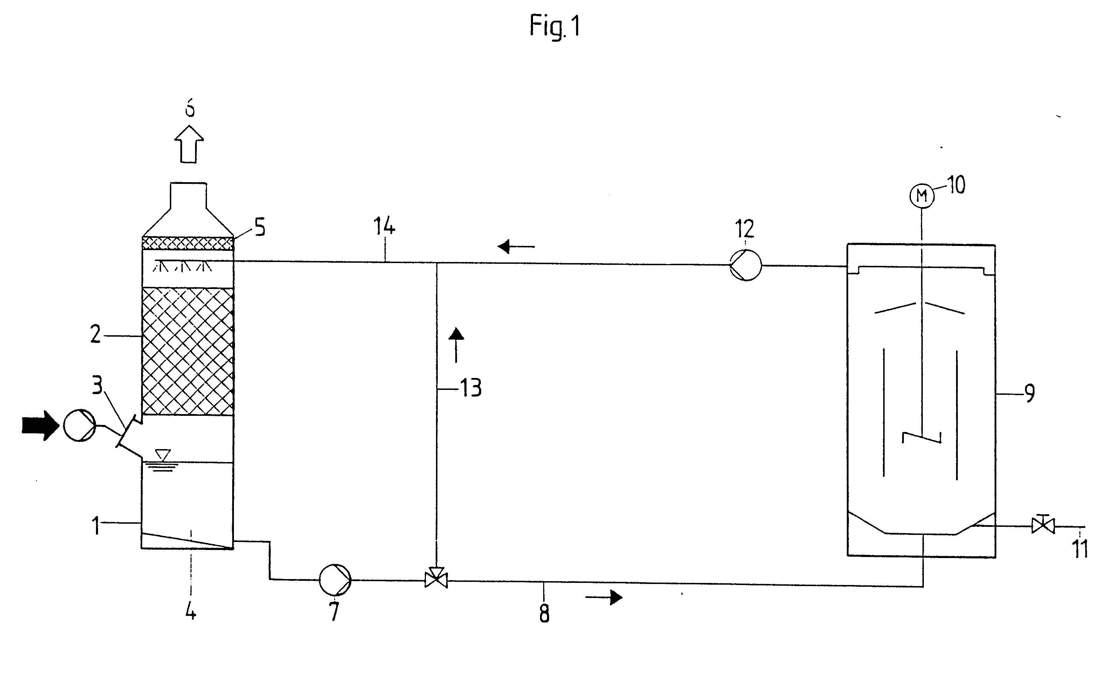

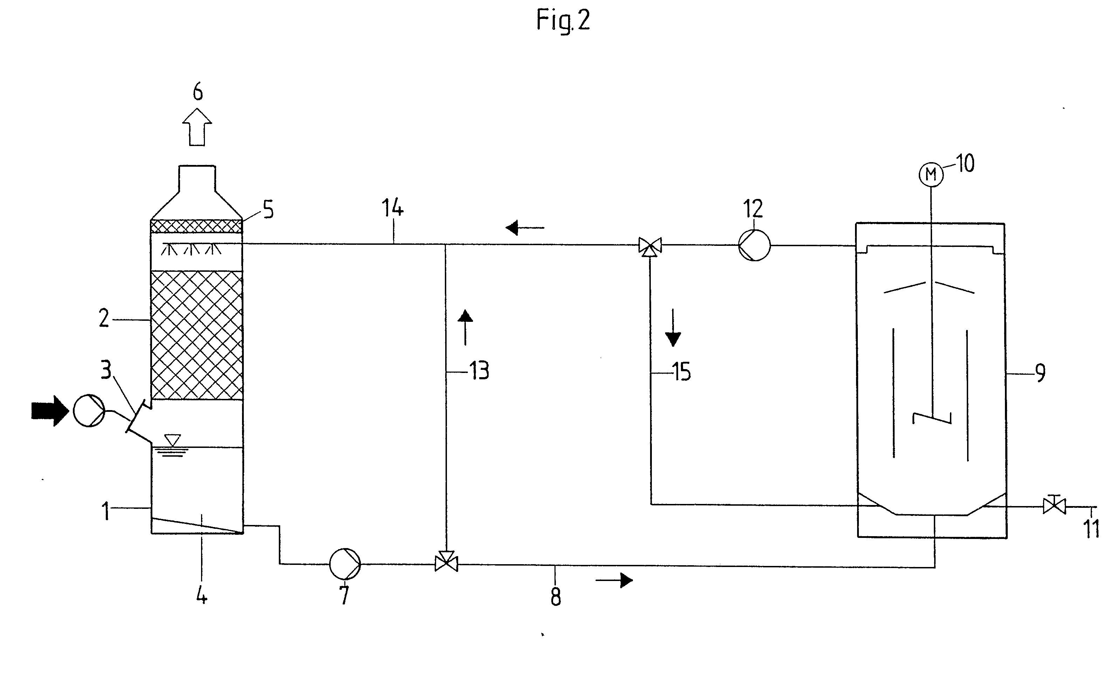

Das in Gegenrichtung zur herabrieselnden Aktivkohlesuspension geführte und mit Schadstoffen geladene Gas (Rohgaseintritt 3) wurde dabei mit der Aktivkohlesuspension in Kontakt gebracht. Die durchschnittliche Berieselungsdichte lag bei 20 m³/m²h in der Gaswaschvorrichtung. Mit einer Geschwindigkeit von 2m/sec wurde das Gas durch die Gaswaschvorrichtung geleitet. Die schadstoff- und adsorptionsmittelhaltige Waschflüssigkeit wurde am Boden der Gaswaschvorrichtung von der Waschflüssigkeitsvorlage (4) abgezogen und zumindestens einem Reaktor, vorzugsweise Wirbelbettreaktor (9), geleitet und dort bei einer mittleren Verweilzeit von 3 Stunden unter ständiger Zwangsbewegung, vorzugsweise unter Verwendung von mindestens einem Rührer (10) und/oder von mindestens einer Pumpe, und in Gegenwart von aeroben Bakterien und Sauerstoff gereinigt. Die gereinigte aktivkohlehaltige Waschflüssigkeit wurde in die Gaswaschvorrichtung zurückgeführt. In den beigefügten Figuren 1 und 2 sind Ausführungsbeispiele des erfindungsgemäßen Verfahrens und der erfindungsgemäßen Vorrichtung schematisch dargestellt.

In den Figuren 1 und 2 wird in der Gaswaschvorrichtung (1), vorzugsweise Gegenstromabsorber oder einem Waschturm, oberhalb einer geordneten Stoffaustauschzone (2) die adsorptionsmittelhaltige Suspension, vorzugsweise Aktivkohlesuspension mit einer durchschnittlichen Anwendungskonzentration von 40 g/l bis 200 g/l eingeleitet und gleichmäßig oder nahezu gleichmäßig verteilt. Das unter Ziffer 3 eingeleitete Rohgas (Rohgaseintritt) wird in Kontakt mit der Adsorptionsmittelkonzentration gebracht, vorzugsweise in Gegenströmung geführt, wobei evtl. mitgerissene Flüssigkeitstropfen in der Tropfenabscheiderzone zurückgehalten werden, bevor das gereinigte Gas an der Gasaustrittsstelle (6) austritt. Am Boden der Gaswaschvorrichtung ist vorzugsweise eine Waschflüssigkeitsvorlage (4) angeordnet, die nach einer bevorzugten Ausführungsform einen schrägen oder trichterförmigen Boden aufweist. Unter Verwendung mindestens einer Pumpe, vorzugsweise Kreislaufpumpe (7), wird die aktivkohlehaltige schadstoffbeladene Suspension von der Gaswaschvorrichtung (1) weggepumpt und vorzugsweise über eine Zulaufleitung (8) zu dem Reaktor, vorzugsweise Wirbelbettreaktor (9) geführt. Der Reaktor (9) enthält aerobe Bakterien, die unter Mitverwendung von Sauerstoff oder sauerstoffhaltigen Gasen die Gasverunreinigungen abbauen, wobei die Flüssigkeit, vorzugsweise unter Verwendung von mindestens einer Rührvorrichtung (10) und/oder mindestens einer zusätzlichen Pumpe unter Zwangsbewegung gehalten wird. An dem Reaktor, vorzugsweise am Boden oder in der Nähe des Bodens, ist eine Öffnung oder Vorrichtung zur Entfernung von Schlamm (11) angeordnet. Die gereinigte aktivkohlehaltige Suspension wird unter Verwendung mindestens einer Kreislaufpumpe (12), die dem Wirbelbettreaktor zugeordnet ist, zur Gaswaschvorrichtung geführt und dort erneut mit dem Rohgas in Kontakt gebracht oder in Form eines Teilstromes (15) der gereinigten adsorptionsmittelhaltigen Waschflüssigkeit an einer anderen Stelle des Reaktors, vorzugsweise im unteren Teil des Reaktors oder in der Nähe des Bodens eingeführt oder nach einer Ausführungsform mit einem noch Verunreinigungen enthaltenden adsorptionsmittelhaltigen Teilstrom der Waschflüssigkeit (13) vereinigt und erneut der Waschvorrichtung geleitet. Der Rücklauf vom Wirbelbettreaktor oder Reaktor (9) erfolgt über die Rücklaufleitung (14).

**Ansprüche**

1. Verfahren zur Reinigung von Abgasen durch Wäsche mit einer Adsorptionsmittel-Suspension, enthaltend mindestens ein feinteiliges Adsorptionsmittel mit einem mittleren Körnungsdurchmesser von 0,0001 mm bis 5 mm, die zumindestens einer Gaswaschvorrichtung kontinuierlich zugeführt, dort verteilt und mit dem Abgas in Kontakt gebracht, die Schadstoffe, Verunreinigungen oder abzutrennenden Stoffe oder ein Teil derselben auf biologischem Wege umgesetzt, abgebaut und/oder chemisch oder physikalisch geändert und/oder ganz oder teilweise nachfolgend abgetrennt werden, dadurch gekennzeichnet, daß

a) die Adsorptionsmittel-Suspension in einer Konzentration (durchschnittliche Anwendungskonzentration) von 40 g/l bis 200 g/l, gleichmäßig oder nahezu gleichmäßig in der Gaswaschvorrichtung verteilt,

b) die Adsorptionsmittel-Suspension in der Gaswaschvorrichtung über mindestens eine geordnete Stoffaustauschzone geleitet und in Kontakt mit dem Gas gebracht,

c) danach die adsorptionsmittelhaltige Waschflüssigkeit in mindestens einem, von der Gaswasch-Vorrichtung getrennt angeordneten Reaktor geleitet, die biologisch abbaubaren oder umwandelbaren Verunreinigungen unter Mitverwendung von aeroben Bakterien und Sauerstoff oder sauerstoffhaltigen Gasen mit den in der Flüssigkeit enthaltenden Gasverunreinigungen unter Zwangsbewegung der adsorptionsmittelhaltigen und aerobe Bakterien enthaltenden Waschflüssigkeit umgesetzt und

d) die nach der Umsetzung entstandene gereinigte Flüssigkeit oder Suspension ganz oder in einem Teilstrom zu der Gaswaschvorrichtung zurückgeführt, dort verteilt und mit dem zu reinigenden Gas erneut in Kontakt gebracht wird.

2. Verfahren nach Anspruch 1, dadurch gekennzeichnet, daß die .Adsorptionsmittel-Suspension in einer Mindestberieselungsdichte von 3 bis 40 m³/m²h, vorzugsweise 5 bis 25 m³/m²h, in der Gaswaschvorrichtung verteilt wird.

3. Verfahren nach Ansprüchen 1 und 2, dadurch gekennzeichnet, daß die mittlere Verweilzeit der Adsorptionsmittelsuspension in der Gaswaschvorrichtung oder der Stoffaustauschzone der Gaswaschvorrichtung weniger als 40 sek beträgt, während die mittlere Verweilzeit der aerobe Bakterien enthaltenden Adsorptionsmittelsuspension im Reaktor mehr als das 90-fache, vorzugsweise mehr als das 150-fache, der mittleren Verweilzeit in der Gaswaschvorrichtung oder Stoffaustauschvorrichtung beträgt.

4. Verfahren nach einem oder mehreren der Ansprüche 1 bis 3, dadurch gekennzeichnet, daß die durchschnittliche Verweilzeit der Waschflüssigkeit oder Adsorptionsmittel-Suspension in der Gaswaschvorrichtung weniger als 12 sek, vorzugsweise weniger als 6 sek, beträgt.

5. Verfahren nach einem oder mehreren der Ansprüche 1 bis 4, dadurch gekennzeichnet, daß die Zwangsbewegung im Reaktor mit einer derartigen Geschwindigkeit erfolgt, daß im Durchschnitt mehr als 1 dm³ Adsorptionsmitteldispersion oder Waschflüssigkeit in weniger als 30 sek, vorzugsweise in weniger als 10 sek, um mehr als 1 dm bewegt wird.

6. Verfahren nach einem oder mehreren der Ansprüche 1 bis 5, dadurch gekennzeichnet, daß die Adsorptionsmittel-Suspension aus einer wäßrigen Aktivkohle-Suspension oder einer wäßrigen adsorptive Kohle enthaltenden Suspension besteht, enthaltend Aktivkohle mit einem mittleren Körnungsdurchmesser von 0,005 mm bis 1 mm, und die wäßrige Aktivkohle-Suspension in einer durchschnittlichen Anwendungskonzentration von 50 g/l bis 150 g/l in der Gaswaschvorrichtung verteilt wird.

7. Verfahren nach Ansprüchen 1 bis 6, dadurch gekennzeichnet, daß die durchschnittliche Verweilzeit der adsorptionsmittelhaltigen und aerobe Bakterien enthaltenden Waschflüssigkeit im Wirbelreaktor unter Zwangsbewegung 1 bis 4 Std, vorzugsweise 2 bis 3 Std, beträgt.

8. Verfahren nach einem oder mehreren der Ansprüche 1 bis 7, dadurch gekennzeichnet, daß bei der biologischen Umsetzung im Reaktor die zu reinigende Waschflüssigkeit und/oder die Waschflüssigkeit in der Gaswaschvorrichtung auf einen pH-Wert von 5,5 bis 8,5, vorzugsweise 6 bis 8, eingestellt wird.

9. Verfahren nach einem oder mehreren der Ansprüche 1 bis 8, dadurch gekennzeichnet, daß die geordnete Stoffaustauschzone aus Stoffaustauschvorrichtungen mit einem großen freien Durchlaß- oder Durchflußvermögen besteht, die in, parallel oder annähernd parallel zu der Strömungsrichtung, Rieselrichtung oder Durchflußrichtung der Adsorptionsmittelsuspension und/oder senkrecht oder annähernd senkrecht im Waschturm angeordnet sind.

10. Verfahren nach einem oder mehreren der Ansprüche 1 bis 9, dadurch gekennzeichnet, daß ein Teil der Aktivkohle oder Aktivkohlesuspension nach dem Durchtritt durch mindestens eine Gaswaschvorrichtung abgetrennt oder abgepumpt wird und dieser Teil der aktivkohlehaltigen Flüssigkeit im Kreislauf geführt und/oder zur Gaswaschvorrichtung ohne Reinigung rückgeführt und/oder der gereinigten Aktivkohlesuspension, die aus dem Reaktor kommt, zugefügt und/oder zur Einhaltung oder zur Einstellung (gegebenenfalls mit Aktivkohle und/oder Wasser) der Anwendungskonzentration zugefügt wird.

11. Verfahren nach einem oder mehreren der Ansprüche 1 bis 10, dadurch gekennzeichnet, daß die zu reinigende, mit den Abgasen oder Verunreinigungen beladene adsorptionsmittelhaltige Waschflüssigkeit in einen Reaktorteilraum in ein darin enthaltenes, im wesentlichen aus Wasser und/oder Waschflüssigkeit bestehendes Gemisch eingeleitet wird, daß die eingeleitete Waschflüssigkeit und Reaktorflüssigkeit unter Bildung zirkulierender Ströme oder Wirbel in den übrigen Reaktorraum übertritt oder durchtritt und die Bildung der zirkulierenden Ströme oder Wirbel durch die eingeleitete zu reinigende Waschflüssigkeit, vorzugsweise durch den Waschflüssigkeitszuleitungspumpendruck und/oder durch mindestens ein Rührwerk gesteuert oder unterstützt wird.

12. Verfahren nach einem oder mehreren der Ansprüche 1 bis 11, dadurch gekennzeichnet, daß die den Reaktor durchlaufende adsorptionsmittelhaltige Waschflüssigkeit während des vollständigen oder teilweisen Abbaues der biologisch abbaubaren Verunreinigungen der Waschflüssigkeit durch aerobe Mikroorganismen mindestens einen oberhalb des Bodens des Reaktors angeordneten Reaktorteilraum, vorzugsweise mindestens einen Einleitungsschacht oder eine Einleitungsröhre, durchströmt, bevor die gereinigte adsorptionsmittelhaltige Waschflüssigkeit in den Waschturm oder die Gaswaschvorrichtung geleitet wird.

13. Vorrichtungskombination zur Reinigung von Abgasen, enthaltend mindestens eine Gaswaschvorrichtung für den Kontakt einer Adsorptionssuspension mit dem Abgas, mindestens eine Vorrichtung oder einen Reaktor zum biologischen Abbau der Gasverunreinigungen oder Schadstoffe, unter Mitverwendung von aeroben Bakterien sowie ggf. eine Vorreinigungsvorrichtung, wobei die Vorrichtungen unmittelbar oder mittelbar in an sich bekannter Weise in Verbindung stehen, dadurch gekennzeichnet, daß in der Gaswaschvorrichtung eine geordnete Stoffaustauschzone angeordnet ist, bestehend aus rohrähnlichen oder prismenförmigen Stoffaustauschvorrichtungen oder Rieselkörpern, die ein großes, freies Durchlaß-oder Durchflußvermögen aufweisen, die in, parallel oder annähernd parallel zur Strömungsrichtung, Rieselrichtung oder Durchflußrichtung der Adsorptionsmittelsuspension und/oder senkrecht oder annähernd senkrecht im Waschturm angeordnet sind und der Wirbelreaktor mit mindestens einer Rühr- oder Pumpvorrichtung oder ähnlichen Vorrichtungen zur Zwangsbewegung und Durcheinanderwirbelung der Adsorptionssuspension und aeroben Bakterien versehen ist.

14. Vorrichtung nach Anspruch 13, dadurch gekennzeichnet, daß die rohrähnlichen oder prismenförmigen Stoffaustauschvorrichtungen oder Rieselkörper, die die geordnete Stoffaustauschzone bilden, durchlochte, unterbrochene oder netzartige Seitenwandungen aufweisen.

15. Vorrichtung nach Ansprüchen 13 und 14, dadurch gekennzeichnet, daß die Mikroorganismen enthaltende Reinigungsvorrichtung (Reaktor) durch mindestens eine Trennwand, vorzugsweise durch einen Trennschacht oder eine Trennröhre, in einen Einleitungsschachtraum und den übrigen Reaktorraum getrennt ist, daß die untere Kante der Trennwand
mehr als 7 cm, vorzugsweise
mehr als 20 cm
(gemessen in senkrechter Richtung), vom Reaktorboden entfernt ist, die Einleitungsstelle für die zu reinigende Waschflüssigkeit in der Nähe des Einleitungsschachtraumes, vorzugsweise unterhalb des Einleitungsschachtraumes, und die Wasseraustrittsstelle im oberen Teil des Reaktorraumes angeordnet ist.

16. Vorrichtung nach einem oder mehreren der Ansprüche 13 bis 15, dadurch gekennzeichnet, daß der Trennschacht oder die Trennröhre Unterbrechungen, Schlitze, Löcher und/oder Ausnehmungen aufweist.

17. Vorrichtung nach einem oder mehreren der Ansprüche 13 bis 16, dadurch gekennzeichnet, daß in dem Reaktorteilraum, vorzugsweise in dem Einleitungsschachtraum oder in der Einleitungsröhre, mindestens ein Rührwerk angeordnet ist.

18. Vorrichtung nach einem oder mehreren der Ansprüche 13 bis 17, dadurch gekennzeichnet, daß der Reaktorboden schräg oder konkavähnlich ausgebildet ist und/oder mindestens eine schräg oder konkavähnlich angeordnete Bodenplatte enthält.

Fig.1

Fig.2

EP 0 357 960 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8 703 532 (ARASIN GMBH)<br>* Ansprüche 1-9; Figur *<br>--- | 1,11-18 | B 01 D 53/34 |
| A,P | EP-A-0 282 750 (ARASIN GMBH)<br>* Ansprüche 1,5 *<br>--- | 1 | |
| A | EP-A-0 133 222 (BAYER AG)<br>* Ansprüche 1,8 *<br>--- | 1,3,4 | |
| A | DE-A-3 641 442 (KERAMCHEMIE GMBH)<br>* Anspruch 1 *<br>--- | 1 | |
| A | DE-A-3 224 350 (DAIMLER BENZ AG)<br>* vollständiges Dokument *<br>----- | | |

RECHERCHIERTE
SACHGEBIETE (Int. Cl.5)

B 01 D 53/00

Der vorliegende Recherchenbericht wurde für alle Patentansprüche erstellt

| Recherchenort | Abschlußdatum der Recherche | Prüfer |
|---|---|---|
| BERLIN | 09-10-1989 | BERTRAM H E H |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument